(19) Europäisches Patentamt
European Patent Office
Office européen des brevets

(11) EP 1 403 322 A1

(12) EUROPEAN PATENT APPLICATION
published in accordance with Art. 158(3) EPC

(43) Date of publication:
**31.03.2004 Bulletin 2004/14**

(21) Application number: **02736089.0**

(22) Date of filing: **13.06.2002**

(51) Int Cl.[7]: **C08L 67/02**, C08K 5/10, C08K 5/435

(86) International application number:
**PCT/JP2002/005919**

(87) International publication number:
**WO 2002/102897 (27.12.2002 Gazette 2002/52)**

(84) Designated Contracting States:
**AT BE CH CY DE DK ES FI FR GB GR IE IT LI LU MC NL PT SE TR**

(30) Priority: **13.06.2001 JP 2001178171**
**22.06.2001 JP 2001189315**
**16.07.2001 JP 2001215703**
**28.11.2001 JP 2001362133**

(71) Applicant: **Kao Corporation**
**Tokyo 103-8210 (JP)**

(72) Inventors:
- **TSUCHIHASHI, Masaaki, c/o Kao Corp. Res. Labo. Wakayama-shi, Wakayama 640-8580 (JP)**
- **TAKENAKA, Akira, c/o Kao Corp. Res. Labo. Wakayama-shi, Wakayama 640-8580 (JP)**

(74) Representative: **HOFFMANN EITLE**
**Patent- und Rechtsanwälte**
**Arabellastrasse 4**
**81925 München (DE)**

# (54) PLASTICIZER FOR POLYESTER RESIN

(57) Provided are a plasticizer for amorphous polyester resin which can give softness without hindering the transparency of the amorphous polyester resin, and an amorphous polyester resin composition superior in softness, transparency and heat resistance. A plasticizer for amorphous polyester resin, which is made of an ester of an (Aa) component selected from hydroxy aromatic carboxylic acid (AI), hydroxy condensed polycyclic aromatic carboxylic acid, hydroxy alicyclic carboxylic acid and others, and an (Ab) component selected from aliphatic alcohol, alicyclic alcohol, aromatic alcohol, phenol, alkylphenol, or alkylene oxide added products thereof.

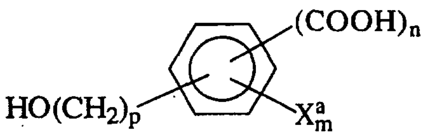

(AI)



Printed by Jouve, 75001 PARIS (FR)

## Description

Technical Field to which the invention belongs

The present invention relates to a plasticizer for amorphous polyester resin, and an amorphous polyester resin composition superior in softness, transparency and heat resistance.

Prior Art

Amorphous polyester resin having no definite melting point is used as material for various films or sheets. The amorphous polyester resin is better in workability than ordinary polyester resin and can undergo calendaring, but has a drawback that the resin whitens easily when being bent. Amorphous polyester resin which can satisfy both of transparency and softness has never been achieved.

As a technique for making amorphous polyester resin soft, on the other hand, a technique of adding thereto a plasticizer such as an aliphatic dicarboxylic acid alkyl ether ester or a polyethylene glycol aliphatic acid ester is disclosed in, for example, Japanese Patent Application Laid-Open (JP-A) No. 2000-290415 or 20001-151996. When these plasticizers are added, however, transparency cannot be satisfied. When summer is supposed and the resin is stored at a high temperature, the transparency and softness lower remarkably so as to cause such problems that the plasticizer bleeds out onto the sheet surface.

Disclosure of the Invention

The object of the present invention is to provide a plasticizer for amorphous polyester resin which can give softness without hindering transparency of the amorphous polyester resin, and anamorphous polyester composition superior in softness, transparency and heat resistance.

The present invention is a plasticizer for amorphous polyester resin which comprises any one of the following (A), (B), (C) and (D).

(A) an ester of the following (Aa) component and (Ab) component:

(Aa) at least one selected from a hydroxy aromatic carboxylic acid represented by the following formula (AI):

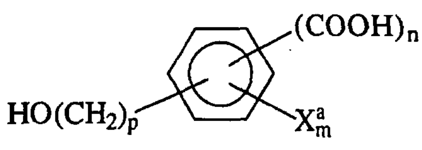

(AI)

(wherein $X^a$ represents a hydrogen atom, a hydroxyl group, an alkyl, alkenyl or alkoxy group having 1 to 22 carbon atoms, or a halogen atom, n and m are each an integer of 1 or more, n + m is 5 and p is an integer of 0 to 3), a hydroxy condensed polycyclic aromatic carboxylic acid or a hydroxy alicyclic carboxylic acid having, in a single molecule thereof, one or more hydroxyl groups and one or more carboxylic groups, anhydrides of these carboxylic acids, or C1-3 lower alkyl esters of these carboxylic acids, and

(Ab) at least one selected from a hydroxy compound selected from an aliphatic alcohol, an alicyclic alcohol, an aromatic alcohol, phenol and an alkyl phenol, or alkylene oxide added products (the carbon atom number of the alkylene group being from 2 to 4, and the average number of added alkylene oxide molecules being 0 or more and 30 or less) of these hydroxy compounds;

(B) an ester of the following (Ba) component and (Bb) component:

(Ba) at least one selected from an aromatic carboxylic acid represented by the following formula (BI):

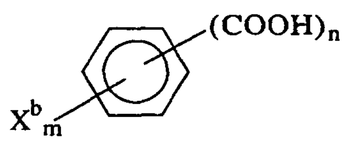

( BI )

(wherein $X^b$ represents a hydrogen atom, a methyl group, or a halogen atom, n and m are each an integer of 1 or more and n + m is 6), a condensed polycyclic aromatic carboxylic acid or an alicyclic carboxylic acid having, in a single molecule thereof, one or more carboxylic groups, anhydrides of these carboxylic acids, or C1-3 lower-alkyl esters of these carboxylic acids, and

(Bb) at least one selected from an alkylene oxide added product (the carbon atom number of the alkylene group being from 2 to 4, and the average number of added alkylene oxide molecules being from 1 to 30) of a monohydroxy compound selected from an aliphatic monoalcohol, an alicyclic monoalcohol, an aromatic monoalcohol, phenol and an alkyl phenol;

(C) an N-alkylated product of an aromatic sulfonamide (the carbon atom number of the alkyl group being from 1 to 22) ; and

(D) an ester of the following (Da) component and (Db) component:

(Da) at least one selected from an aromatic monocarboxylic acid represented by the following formula (DI):

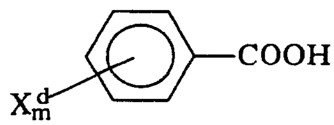

(D I )

(wherein $X^d$ represents a hydrogen atom, an alkyl, alkenyl or alkoxy group having 1 to 22 carbon atoms, or a halogen atom, m is an integer of 1 to 5 and $X^d$'s, the number of which is m, may be the same or different) , an aliphatic monocarboxylic acid having a linear or branched chain having 1 to 22 carbon atoms, a condensed polycyclic aromatic monocarboxylic acid, an alicyclic monocarboxylic acid, or lower-alkyl esters (the carbon atom number of the alkyl group being from 1 to 3) of these monocarboxylic acids,

(Db) at least one selected from alkylene oxide added products (the carbon atom number of the alkylene group being from 2 to 4, and the average number of added alkylene oxide molecules per hydroxyl group being 0 or more and 10 or less) of a hydroxy compound selected from an aliphatic bivalent alcohol represented by the following formula (DII):

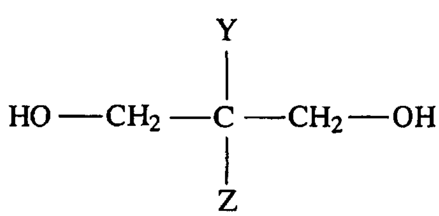

(DII)

(wherein Y and Z represent an alkyl or alkenyl group having 1 to 8 carbon atoms and may be the same as or different from each other), a polyhydric alcohol having, in a single molecule thereof, three or more hydroxyl groups and having 3 to 30 carbon atoms, and an alicyclic diol having, in a single molecule thereof, two hydroxyl groups or methylol groups.

Furthermore, the present invention also provides the use of the above-mentioned plasticizer as a plasticizer for amorphous polyester resin and the composition containing the amorphous polyester resin.

In the composition, it is preferred that the plasticizer is the (A), the plasticizer is the (B) which contains at least one selected from phosphoric acid and phosphorous acid and the content thereof is from 1 to 70 parts by weight per 100 parts by weight of the amorphous polyester resin, or the plasticizer is the (C) and the content thereof is from 3 to 50 parts by weight per 100 parts by weight of the amorphous polyester resin.

The composition may comprise an anionic surfactant as a lubricant.

Detailed Description of the Invention

The following describes the plasticizers A, B, C and D. The description is common to the plasticizers A, B, C and D except the specifying of the (a) and (b) components.

[Plasticizer A]

Examples of the hydroxy aromatic carboxylic acid represented by the general formula (AI) in the (Aa) component which constitutes the plasticizer of the present invention include p-hydroxybenzoic acid, salicylic acid, 4-hydroxymethylbenzoic acid, 5-hydroxyisophthalic acid, 2-hydroxy-3-methylbenzoic acid, 2-hydroxy-5-methylbenzoic acid, 2,4-dihydroxybenzoic acid, 2,3-dihydroxybenzoic acid, 3,4,5-trihydroxybenzoic acid, 4-hydroxy-3-methoxybenzoic acid and the like. Examples of the hydroxy condensed polycyclic aromatic carboxylic acid include 3-hydroxy-2-naphthoic acid, 1-hydroxy-2-naphthoic acid, 1,4-dihydroxy-2-naphthoic acid and the like. An example of the hydroxy alicyclic carboxylic acid is 4-hydroxycyclohexanoic acid and the like.

Among these (Aa) components, preferred are p-hydroxybenzoic acid, salicylic acid, 4-hydroxymethylbenzoic acid, 5-hydroxyisophthalic acid, 3-hydroxy-2-naphthoic acid and 2-hydroxy-5-methylbenzoic acid, or C1-3 lower-alkyl esters thereof, and particularly preferred are p-hydroxybenzoic acid and salicylic acid, or C1-3 lower-alkyl esters thereof.

In the (Ab) component which constitutes the plasticizer of the present invention, the aliphatic alcohol is preferably a monovalent alcohol having an alkyl or alkenyl group having 1 to 22, particularly 1 to 18 carbon atoms, or a polyhydric alcohol having 3 to 30 carbon atoms from the viewpoint of compatibility with amorphous polyester resin. Examples of the alicyclic alcohol include alicyclic monovalent alcohols such as cyclohexyl alcohol, cyclohexane methanol, cyclopentyl alcohol and cycloheptyl alcohol; and alicyclic diols such as cyclohexanediol, cyclohexanedimethanol, cyclopentanediol, cyclopentanedimethanol, cycoheptanediol, and cycloheptanedimethanol. Examples of the aromatic alcohol include benzyl alcohol, methylbenzyl alcohol, dimethylbenzyl alcohol and the like. The alkylphenol is preferably an alkylphenol having an alkyl group having 1 to 18 carbon atoms, and is more preferably a nonylphenol or an octylphenol.

Among the (Ab) components, preferred from the viewpoint of compatibility with amorphous polyester resin is a compound represented by the general formula (AII):

$$R^1O(AO)_yH \qquad \text{(AII)}$$

(wherein $R^1$ represents a hydrogen atom, a linear or branched alkyl or alkenyl group having 1 to 22 carbon atoms, a phenyl group, a benzyl group, or an alkylphenyl or alkylbenzyl group having an alkyl group having 1 to 18 carbon atoms, A represents an alkylene group having 2 to 4 carbon atoms, y is a numerical value of 0 to 30, which represents the average number of added alkylene oxide molecules, and A's, the number of which is y, may be the same or different).

In the general formula (AII) , $R^1$ is preferably a hydrogen atom, or an alkyl group having 1 to 22 carbon atoms, and is more preferably a hydrogen atom or an alkyl group having 1 to 18 carbon atoms. A is preferably an ethylene group or a propylene group, and y is preferably a numerical value of 0 to 10.

In the (Ab) component which constitutes the plasticizer of the present invention, the carbon atom number of A in the general formula (AII) is preferably 3 and 4 from the viewpoint of resistance against water whitening. In the case that the carbon atom number is 2, the ethylene oxide (EO) addition fraction represented by the following equation is preferably from 0 to 50%, more preferably from 0 to 40% within the range of [the plasticizer of the present invention] /[amorphous polyester resin] (weight ratio) = 5/100 or more and less than 20/100.

$$\text{EO addition fraction (\%)} = (44 \times \text{the number of added EO molecules/the molecular weight of the plasticizer}) \times 100$$

The ethylene oxide (EO) addition fraction is preferably from 0 to 40%, more preferably from 0 to 30% within the range of [the plasticizer of the present invention]/[amorphous polyester resin] (weight ratio) = 20/100 to 30/100.

In the (Ab) component which constitutes the plasticizer of the present invention, preferred from the viewpoint of resistance against water whitening is a compound represented by the following general formula (AIII):

$$R^2OH \qquad (AIII)$$

wherein $R^2$ is a linear or branched alkyl or alkenyl group having 3 to 22 carbon atoms, a benzyl group, or an alkylbenzyl group having an alkyl group having 1 to 18 carbon atoms.

In the general formula (AIII) , $R^2$ is preferably an alkyl group having 3 to 22 carbon atoms, and is more preferably an alkyl group having 6 to 16 carbon atoms.

The resistance against water whitening referred to herein means a nature for preventing the following: when a composition obtained by adding the plasticizer of the present invention to amorphous polyester resin contacts water for a long time, the surface thereof turns white so that the transparence thereof is damaged.

The (Ab) component which constitutes the plasticizer of the present invention may be the above-mentioned (Db). This includes the compound represented by the above-mentioned formula (DII).

Examples of the aliphatic bivalent alcohol represented by the general formula (DII) include neopentyl glycol, 2-butyl-2-ethyl-1,3-propanediol and the like. Examples of the polyhydric alcohol having, in a single molecule thereof, three or more hydroxyl groups and having 3 to 30 carbon atoms include glycerin or polyglycerin having 3 to 30 carbon atoms, preferably 3 to 12 carbon atoms, sorbitol, sorbitan, trimethylol propane, pentaerythritol and the like. Examples of the alicyclic diol having, in a single molecule thereof, two hydroxyl groups or methylol groups include cyclohexanediol, cyclohexanedimethanol, cyclopentandiol, cyclopentanedimethanol, cycloheptanediol, cycloheptanedimethanol and the like. Preferred are cyclohexanediol, and cyclohexanedimethanol.

The alkylene oxide added product is preferably an ethylene oxide added product or a propylene oxide added product, and is particularly preferably an ethylene oxide added product. The average number of added alkylene oxide molecules per hydroxyl group is more than 0 and 10 or less and is preferably from 1 to 8, particularly preferably from 1 to 6.

The plasticizer of the present invention comprises an ester obtained by esterification reaction or transesterification reaction of the (Aa) component and the (Ab) component, and the ester may be a partial ester or a complete ester and is preferably a complete ester from the viewpoints of compatibility with resin and heat resistance.

The ester of the (Aa) component and the (Ab) component which constitute the plasticizer of the present invention is preferably an ester obtained from a combination wherein the (Aa) component is p-hydroxybenzoic acid or salicylic acid and the (Ab) component is a compound represented by the general formula (AIII), and is particularly preferably an ester obtained from a combination wherein the (Aa) component is p-hydroxybenzoic acid and the (Ab) component is 2-ethylhexanol from the viewpoints of compatibility with resin and resistance against water whitening.

[Plasticizer B]

Examples of the aromatic carboxylic acid represented by the general formula (BI) in the (Ba) component which constitutes the plasticizer of the present invention include benzoic acid, phthalic acid, terephthalic acid, trimellitic acid, pyromellitic acid and the like. Examples of the condensed polycyclic aromatic carboxylic acid include 1,4-naphthalenedicarboxylic acid, 2,6-naphthalenedicarboxylic acid, α-naphthalenecarboxylic acid, β-naphthalenecarboxylic acid, 1,4,5,8-naphthalenetetracarboxylic acid and the like. Examples of the alicyclic carboxylic acid include 1,4-cyclohexanedicarboxylic acid, 1,2-cyclohexanedicarboxylic acid, cyclohexanecarboxylic acid, cyclopentanecarboxylic acid, cycloheptanecarboxylic acid, 1,2,3,4-cyclohexanetetracarboxylic acid and the like.

Among these (Ba) components, preferred are benzoic acid, phthalic acid, terephthalic acid, trimellitic acid, pyromellitic acid, naphthalenedicarboxylic acid and cyclohexanedicarboxylic acid, or anhydrides or C1-3 lower-alkyl esters thereof. Particularly preferred are compounds wherein n is 2 or more in the general formula (BI) from the viewpoint of heat resistance.

In the (Bb) component which constitutes the plasticizer of the present invention, the aliphatic monoalcohol is preferably a monoalcohol having an alkyl or alkenyl group having 1 to 22 carbon atoms, in particular, 1 to 10 carbon atoms from the viewpoint of compatibility with amorphous polyester resin. Examples of the alicyclic monoalcohol include cyclohexyl alcohol, cyclohexane methanol, cyclopentyl alcohol, cycloheptyl alcohol and the like. Examples of the aromatic monoalcohol include benzyl alcohol, methylbenzyl alcohol, dimethylbenzyl alcohol and the like. The alkylphenol is preferably an alkylphenol having an alkyl group having 1 to 18 carbon atoms, and is more preferably nonylphenol or octylphenol.

Among the (Bb) components, preferred from the viewpoint of compatibility with amorphous polyester resin is a compound represented by the general formula (BII):

$$R^1O(AO)_yH \qquad (BII)$$

(wherein $R^1$ represents a linear or branched alkyl or alkenyl group having 1 to 22 carbon atoms, a phenyl group, a benzyl group, or an alkylphenyl group having an alkyl group having 1 to 18 carbon atoms, A represents an alkylene group having 2 to 4 carbon atoms, y is a numerical value of 1 to 30, which represents the average number of added alkylene oxide molecules, and A's, the number of which is y, may be the same or different).

In the general formula (BII), $R^1$ is preferably an alkyl group having 1 to 10 carbon atoms, A is preferably an ethylene group or a propylene group, and y is preferably a numerical value of 1 to 10.

The plasticizer of the present invention comprises an ester of the (Ba) component and the (Bb) component, as described above, and the ester may be a partial ester or a complete ester.

[Plasticizer C, N-alkylated product of an aromatic sulfonamide]

Examples of an aromatic sulfonamide that constitutes an N-alkylated product of the aromatic sulfonamide, the product being the plasticizer of the present invention, include benzene sulfonamide, naphthalene sulfonamide and the like. The carbon atom number of the alkyl group of the N-alkylated product is from 1 to 22, preferably from 1 to 18 from the viewpoint of compatibility with amorphous polyester resin.

The N-alkylated product of the aromatic sulfonamide is particularly preferably an N-alkylbenzenesulfonamide represented by the following general formula (CI):

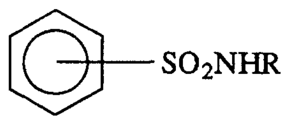

(CI)

(wherein R represents a linear or branched alkyl group having 1 to 22 carbon atoms).

In the general formula (CI), R is preferably a linear or branched alkyl group having 1 to 18 carbon atoms, and is most preferably an alkyl group having 2 to 6 carbon atoms from the viewpoint of compatibility with amorphous polyester resin.

[Plasticizer D]

In the (Da) component which constitutes the plasticizer of the present invention, compounds described below are preferred from the viewpoints of good compatibility with resin and excellent transparency, softness and heat resistance exhibited by the resin composition of the present invention.

That is, examples of the aromatic monocarboxylic acid represented by the general formula (DI) include benzoic acid, and benzoic acid having 1 to 5 substituents, preferably 1 to 2 substituents which are alkyl, alkenyl or alkoxy groups having 1 to 22 carbon atoms, preferably 1 to 12 carbon atoms or which are halogen atoms such as chorine and bromine atoms. Examples of the linear or branched aliphatic monocarboxylic acid having 1 to 22 carbon atoms include acetic acid, butanoic acid, n-octanoic acid, 2-ethylhexanoic acid, isononanic acid and the like. Those having 1 to 12 carbon atoms are preferred. Examples of the condensed polycyclic aromatic monocarboxylic acid include α-naphthalenecarboxylic acid, β-naphthalenecarboxylic acid and the like. Examples of the alicyclic monocarboxylic acid include cyclohexanecarboxylic acid, cyclopentanecarboxylic acid, and cycloheptanecarboxylic acid.

Among these (Da) components, preferred is benzoic acid which may have an alkyl group having 1 to 6 carbon atoms or a halogen atom as a substituent, or a lower-alkyl ester (the carbon atom number of the alkyl group being from 1 to 3).

In the (Db) component which constitutes the plasticizer of the present invention, compounds described below are preferred from the viewpoints of good compatibility with resin and excellent transparency, softness and heat resistance exhibited by the resin composition of the present invention.

Namely, examples of the aliphatic bivalent alcohol represented by the general formula (DII) include neopentyl glycol, 2-butyl-2-ethyl-1,3-propanediol-and the like. Examples of the polyhydric alcohol having, in a single molecule thereof, three or more hydroxyl groups and having 3 to 30 carbon atoms include glycerin or polyglycerin having 3 to 30 carbon atoms, preferably 3 to 12 carbon atoms, sorbitol, sorbitan, trimethylol propane, pentaerythritol and the like. Examples of the alicyclic diol having, in a single molecule thereof, two hydroxyl groups or methylol groups include cyclohexanediol, cyclohexanedimethanol, cyclopentandiol, cyclopentanedimethanol, cycloheptanediol, cycloheptanedimethanol and the like. Preferred are cyclohexanediol, and cyclohexanedimethanol.

The alkylene oxide added product is preferably an ethylene oxide added product or a propylene oxide added product, and is particularly preferably an ethylene oxide added product. The average number of added alkylene oxide molecules per hydroxyl group is more than 0 and 10 or less and is preferably from 1 to 8, particularly preferably from

1 to 6.

In order to obtain an ester of the (Da) component and the (Db) component, it is advisable that when the (Da) component is a monocarboxylic acid, ordinary esterification reaction is conducted and when the (Da) component is a lower-alkyl ester of a monocarboxylic acid, the (Da) component is subjected to transesterification reaction with the (Db) component in the presence of a catalyst such as dibuytltin oxide.

The plasticizer of present invention comprises an ester of the (Da) component and the (Db) component as described above. The ester is preferably a complete ester. In the case of a partial ester, the average esterification degree represented by the following equation is preferably 0.5 or more:

Average esterification degree = (the number of esterified hydroxyl groups in one molecule of the (Db) component)/(the number of hydroxyl groups in the one molecule of the (Db) component)

Amorphous polyester resin

The amorphous polyester resin according to the present invention is a polyester resin having no definite melting point.

The amorphous polyester resins according to the invention, being low in the processing temperature in comparison with ordinary polyester resins having a processing temperature of from 270 to 280°C, can preferably be processed under the condition of 200°C or less, more preferably even in the range of 160 to 190°C, and are excellent in processability; accordingly, the invention polyester resins may be subjected to the calendering process. The processing temperature here means a temperature that can mold the resin; for instance, in the calendering process, it corresponds to a temperature of a roll surface that can mold the resin.

As specific examples of the amorphous polyester resin, there are polyester resins obtained by copolymerizing (A) terephthalic acid or a lower alkyl ester thereof (the alkyl group having 1 to 3 carbon atoms, for instance, dimethyl terephthalate and so on) (hereinafter, referred to as (A) component), (B) ethylene glycol (hereinafter, referred to as (B) component), and (C) a dicarboxylic acid or a lower alkyl ester thereof other than terephthalic acid or the lower alkyl ester thereof (the alkyl group having 1 to 3 carbon atoms) (hereinafter, referred to as (C) component); polyester resins obtained by copolymerizing the (A) component, (B) component and (D) glycol components other than ethylene glycol (hereinafter, referred to as (D) component); and polyester resins obtained by copolymerizing the (A) component, (B) component, (C) component and (D) component.

As the (C) component, one kind or more selected from aromatic dicarboxylic acids, alicyclic dicarboxylic acids, aliphatic dicarboxylic acids and lower alkyl esters thereof can be used. As the aromatic carboxylic acid, isophthalic acid, phthalic acid, 2,6-naphthalene dicarboxylic acid, 1,5-naphthalene dicarboxylic acid, bis(4,4'-carboxyphenyl)methane, anthracene dicarboxylic acid, 4,4'-diphenylether dicarboxylic acid and so on can be used. As the alicylicdicarboxylic acid, 1,4-cyclohexanedicarboxylic acid, 4,4-dicyclohexyl dicarboxylic acid and so on can be used. As the aliphatic dicarboxylic acid, adipic acid, sebacic acid, azelaic acid, dimmer acid and so on can be used. Among the (C) components, isophthalic acid and lower alkyl esters thereof are preferable.

As the (D) component, one kind or more selected from 1,4-cyclohexanedimethanol, propylene glycol, 1,5-pentanediol, 1,6-hexanediol, neopentyl glycol, decamethylene glycol, 4,4'-dicyclohexyl hydroxymethane, 4,4'-dicyclohexyl hydroxy propane, bisphenol A ethylene oxide adduct diol, polyethylene oxide glycol, polypropylene oxide glycol and so on can be used.

In the dicarboxylic acid component in the amorphous polyester resin according to the invention, preferably the aromatic dicarboxylic acid component is 60% by mol or more, and more preferably the (A) component is 60% by mol or more. In addition, in the glycol component, the (B) component is preferably 60% by mol or more.

The glass transition temperatures of the amorphous polyester resins according to the invention are preferably in the range of 50 to 85°C and more preferably 60 to 85°C.

As the amorphous polyester resins according to the invention, TSUNAMI GS1, GS2, GS3 and GS4 available from Eastman Chemical Corp. can be used.

Amorphous polyester resin composition

The amorphous polyester resin composition of the present invention comprises the plasticizer of the present

invention, which comprises an ester as described above, and amorphous polyester resin. The content of the plasticizer of the present invention is preferably from 1 to 70 parts by weight, more preferably from 3 to 50 parts by weight, and particularly preferably from 5 to 30 parts by weight per 100 parts by weight of the amorphous polyester resin from the viewpoints of softness, bleeding resistance, and economy.

By incorporating at least one selected from phosphoric acid or phosphorous acid into the composition of the present invention, the coloring of the resin can be prevented. The content thereof is preferably from 0.001 to 1 part by weight, more preferably from 0.005 to 0.5 part by weight, and particularly preferably from 0.01 to 0.3 part by weight per 100 parts by weight of the amorphous polyester resin.

Lubricant

The composition of the present invention may comprise other components than the above, for example, a lubricant. Examples of the lubricant include amides such as stearic amide, and ethylene bis (stearoamide) ; hydrocarbon type waxes such as polyethylene wax; aliphatic acids such as stearic acid; aliphatic acid esters such as glycerol ester; metal soaps such as calcium stearate; ester waxes such as montanoic acid wax; anionic surfactants having an aromatic ring, such as alkylbenzenesulfonate; and anionic surfactants having an alkylene oxide added moiety, such as polyoxyethylene alkyl ester sulfate. The content of the lubricant is preferably from 0.05 to 3 parts by weight, more preferably from 0.1 to 1.5 part by weight per 100 parts by weight of the amorphous polyester resin.

The lubricant is particularly preferably in the following form:

a lubricant made of an anionic surfactant having, in the molecule thereof, at least one selected from a group represented by -(AO)n- (wherein A represents an alkylene group having 2 to 4 carbon atoms, n represents a numerical value such that the AO fraction in the molecule becomes from 10 to 80%, and A's, the number of which is n, may be the same or different) or an aromatic ring, and an anionic group.

The anionic group is preferably $-SO_3^-$, $-SO_4^-$, or $-COO^-$ . The counter ion of the anionic group is preferably Li, Na, K, Ca, Mg, Al or Zn. An anionic surfactant having, in the molecule thereof, at least one selected from a polyoxyalkylene group or an aromatic ring, and an anionic group is particularly preferred.

In the polyoxyalkylene group, examples of A include ethylene, propylene and butylene groups. From the viewpoint of transparency, an ethylene group is preferred. n is the average number of added alkylene oxide molecules, and represents a numerical value such that the AO fraction in the molecule becomes from 10 to 80%, preferably from 20 to 80%, and more preferably from 25 to 80%.

Examples of the aromatic ring include benzene, naphthalene rings, and the like. Examples of the group having the aromatic ring include a phenyl group, a benzyl group, an alky phenyl group (the carbon atom number of the alkyl group being from 1 to 22) , an alkylbenzyl group (the carbon atom number of the alkyl group being from 1 to 22), a naphthyl group, and an alkylnaphthyl group (the carbon atom number of the alkyl group being from 1 to 18). From the viewpoint of transparency, a phenyl group, a benzyl group, and an alkylpheyl group (the carbon atom number of the alkyl group being from 1 to 18) are preferred.

Examples of the anionic group include $-SO_3^-$, $-SO_4^-$, $-COO^-$ and the like. From the viewpoint of lubricity, $-SO_3^-$ and $-SO_4^-$ are preferred, and $-SO3^-$ is more preferred. Examples of the counter ion of these anionic groups include cations such as Li, Na, K, Ca, Mg, Al and Zn. From the viewpoint of lubricity and transparency, Na, Al and Zn are preferred and Na is more preferred.

Examples of the anionic surfactant in the present invention include alkyl (the carbon atom number being from 1 to 22) benzenesulfonates, polyoxyalkylene (the AO fraction being from 10 to 80%) alkyl or alkenyl (the carbon atom number of the alkyl or alkenyl group being from 6 to 22) ether sulfates, polyoxyalkylene (the AO fraction being from 10 to 80%) alkyl or alkenyl (the carbon atom number of the alkyl or alkenyl group being from 6 to 22) ether acetates, di [polyoxyalkylene (the AO fraction being from 10 to 80%) phenyl ether]sulfosuccinate, di [polyoxyalkylene (the AO fraction being from 10 to 80%) phenyl ether] succinate and the like. From the viewpoint of compatibility, alkyl (the carbon atom number being from 1 to 18) benzenesulfonates, polyoxyethylene (hereinafter referred to as POE) lauryl ether acetate (the AO fraction being from 40 to 80%), di[POE phenyl ether] sulfosuccinate (the AO fraction being from 30 to 70%), and POE oleyl ether sulfonates (the AO fraction being from 50 to 80%) are preferred. Particularly preferred are alkyl (the carbon atom number being from 1 to 18) benzenesulfonates and POE lauryl ether acetates (the AO fraction being from 40 to 70%). Materials which have not been neutralized are not preferred since they have no lubricity.

The composition of the present invention may contain, as components other than the above, an antistatic agent, an anti-fog agent, a light stabilizer, an ultraviolet absorbent, a pigment, an inorganic filler, an antifungal agent, an antibacterial agent, a foaming agent, a flame retardant, and a plasticizer other than the plasticizer of the present invention unless the attainment of the object of the present invention is disturbed.

Since the composition of the present invention is good in workability and can be worked at a low temperature

of, for example, 160 to 190°C, the composition can undergo calendaring and the plasticizer is not easily decomposed. The composition of the present invention is shaped into a film or sheet form, and can be used for various purposes.

The plasticizer of the present invention can give softness without hindering the transparency of amorphous polyester resin. Moreover, when the plasticizer is stored at high temperatures, the resin does not change in softness and transparency and the resin has good heat resistance. It is also possible to prevent whitening at the time of bending the sheet or film made of the amorphous polyester resin composition of the present invention, or whitening at the time of immersing the sheet or film into water.

Examples

Examples A1 to A25, and Comparative Examples 1 to 4, 7 and 8

A composition made of 100 parts by weight of an amorphous polyester resin (TSUNAMI GS2, manufactured by Eastman Chemical Co., glass transition temperature: 81°C), 0.8 part by weight of montanoic acid wax, and each amount of each kind of plasticizers shown in Table A1 and A2 was kneaded with a 6-inch roll of 165°C temperature for 15 minutes, and made into a test piece of 1 mm thickness with a press-forming machine of 190°C temperature.

About the resultant test piece, the softness, the transparency and the surface state thereof were evaluated by the following methods. This test piece was bent at an angle of 180° by hand, and it was observed with the naked eye whether whitening was generated or not. Furthermore, in order to evaluate the heat resistance, the test piece was put into an oven the temperature of which was controlled to 60°C, and then treated for one week. The test piece was allowed to be naturally cooled at room temperature. Thereafter, the softness, the transparency and the surface state were evaluated in the same way. The results are shown in Tables A1, A2 and A2-1.

<Method for evaluating the softness>

The test piece was punched out with a No. 3 dumbbell, and then subjected to a tensile test at a tensile speed of 200 mm/min so as to represent the softness by the 100% modulus.

<Method for evaluating the transparency>

The haze value of the test piece was measured with a haze meter. As the numerical value is smaller, the transparency is better.

<Surface state (generation or non-generation of bleeding)>

About the test piece (100 mm in length × 100 mm in width × 1 mm in thickness) before the heat treatment, the test piece was allowed to stand still in a thermostat of 40°C temperature for one week, and then it was observed with the naked eye whether bleeding of the plasticizer onto the surface thereof was generated or not. About the test piece subjected to the heat treatment at 60°C for one week, the test piece was naturally cooled at room temperature and subsequently it was observed with the naked eye whether or not bleeding of the plasticizer was generated on the surface.

Table A1

| | | Plasticizer *1 | Added amount (parts by weight) | Before heat treatment | | | | After heat treatment (at 60°C for 1 week) | | |
|---|---|---|---|---|---|---|---|---|---|---|
| | | | | 100% Modulus (MPa) | Haze value (%) | Bending whitening | Surface state (existence of bleeding) | 100% Modulus (MPa) | Haze value (%) | Surface state (existence of bleeding) |
| Example | A1 | 2-Ethylhexanol p-hydroxybenzoic acid monoester | 20 | 7.6 | 2.0 | Not found | Not found | 7.5 | 2.0 | Not found |
| | A2 | 2-Ethylhexanol p-hydroxybenzoic acid monoester | 30 | 3.9 | 2.2 | Not found | Not found | 4.0 | 2.2 | Not found |
| | A3 | n-Octanol p-hydroxybenzoic acid monoester | 15 | 11.1 | 2.0 | Not found | Not found | 11.2 | 2.1 | Not found |
| | A4 | n-tetradecanol p-hydroxybenzoic acid monoester | 20 | 7.4 | 2.5 | Not found | Not found | 7.4 | 2.4 | Not found |
| | A5 | Isodecanol p-hydroxybenzoic acid monoester | 20 | 9.2 | 2.4 | Not found | Not found | 9.0 | 2.4 | Not found |
| | A6 | Isotridecanol p-hydroxybenzoic acid monoester | 25 | 8.5 | 2.6 | Not found | Not found | 8.6 | 2.6 | Not found |
| | A7 | POE(2)2-ethylhexyl ether p-hydroxybenzoic acid monoester | 20 | 6.5 | 2.3 | Not found | Not found | 6.4 | 2.3 | Not found |
| | A8 | POE(2) benzyl ether p-hydroxybenzoic acid monoester | 20 | 6.8 | 2.0 | Not found | Not found | 6.8 | 2.1 | Not found |
| | A9 | POE(4) methyl ether p-hydroxybenzoic acid monoester | 15 | 7.9 | 2.8 | Not found | Not found | 7.9 | 2.7 | Not found |
| | A10 | POE(2) butyl ether p-hydroxybenzoic acid monoester | 20 | 6.0 | 2.7 | Not found | Not found | 5.9 | 2.7 | Not found |
| | A11 | 2-ethylhexanol salicylic acid monoester | 20 | 8.9 | 3.5 | Not found | Not found | 9.0 | 3.5 | Not found |
| | A12 | n-Octanol salicylic acid monoester | 20 | 4.9 | 3.7 | Not found | Not found | 5.0 | 3.7 | Not found |
| | A13 | Isononanol salicylic acid monoester | 20 | 9.3 | 3.4 | Not found | Not found | 9.3 | 3.4 | Not found |
| | A14 | n-decanol salicylic acid monoester | 20 | 7.1 | 3.6 | Not found | Not found | 7.1 | 3.7 | Not found |
| | A15 | Isodecanol salicylic acid monoester | 20 | 8.6 | 3.5 | Not found | Not found | 8.5 | 3.4 | Not found |

Table A2

| | | Plasticizer *1 | Added amount (parts by weight) | Before heat treatment | | | | After heat treatment (at 60°Cfor 1 week) | | |
|---|---|---|---|---|---|---|---|---|---|---|
| | | | | 100% Modulus (MPa) | Haze value (%) | Bending whitening | Surface state (existence of bleeding) | 100% Modulus (MPa) | Haze value (%) | Surface state (existence of bleeding) |
| Example | A16 | POE(4) methyl ether salicylic acid monoester | 15 | 5.0 | 3.2 | Not found | Not found | 5.0 | 3.3 | Not found |
| | A17 | POE(2)2-ethylhexyl ether salicylic acid monoester | 20 | 7.1 | 3.3 | Not found | Not found | 7.0 | 3.3 | Not found |
| | A18 | POE(2) benzyl ether salicylic acid monoester | 20 | 5.7 | 3.0 | Not found | Not found | 5.7 | 2.9 | Not found |
| | A19 | 2-ethylhexanol 4-hydroxymethylbenzoic acid monoester | 20 | 8.9 | 3.0 | Not found | Not found | 8.9 | 3.0 | Not found |
| | A20 | POE(4) methyl ether 3-hydroxy-2-naphthoic acid monoester | 20 | 8.7 | 3.2 | Not found | Not found | 8.8 | 3.2 | Not found |
| | A21 | POE(2)POP(2)methyl ether p-hydroxybenzoic acid monoester | 20 | 8.2 | 2.3 | Not found | Not found | 8.1 | 2.3 | Not found |
| | A22 | POE(2)2-ethylhexyl ether 5-hydroxyisophthalic acid diester | 20 | 9.5 | 2.2 | Not found | Not found | 9.4 | 2.2 | Not found |
| | A23 | 2-ethylhexanol 5-hydroxyisophthalic acid diester | 30 | 9.8 | 1.8 | Not found | Not found | 9.8 | 1.9 | Not found |
| | A24 | 2-ethylhexanol 2-hydroxy-5-methylbenzoic acid monoester | 20 | 9.0 | 3.2 | Not found | Not found | 9.0 | 3.2 | Not found |
| | A25 | PEG400 salicylic acid diester | 20 | 7.9 | 3.4 | Not found | Not found | 7.9 | 3.5 | Not found |

Table A2-1

| | | Plasticizer *1 | Added amount (parts by weight) | Before treatment | | | | After treatment (at 60°C for 1week) | | |
|---|---|---|---|---|---|---|---|---|---|---|
| | | | | 100% Modulus (MPa) | Transparency haze value (%) | Bending whitening | Surface state (existence of bleeding) | 100% Modulus (MPa) | Transparency haze value (%) | Surface state (existence of bleeding) |
| Comparative example | 1 | Not added | — | — *2 | 3.8 | Found | — | — *2 | 3.8 | — |
| | 2 | Di 2—ethylhexyl phthalate | 10 | 25.0 | 89.1 | Found | Found | 30.0 | 90.5 | Found |
| | 3 | POE(4) methyl ether adipic acid diester | 20 | 8.5 | 14.2 | Not found | Not found | 27.4 | 51.2 | Found |
| | 4 | Emanon 1112 (Kao Corp.) | 20 | 15.2 | 90.2 | Not found | Found | 29.7 | 91.4 | Found |
| | 7 | Splender R-710 | 15 | 19.5 | 89.4 | Found | Found | 28.5 | 90.1 | Found |
| | 8 | Excepari BP-DL (Kao Corp.) | 20 | 17.9 | 72.5 | Found | Found | 29.0 | 90.1 | Found |

*1: POE(n) represents an n-mole polyoxyethylene added product, POP(n) represents an n-mole polyoxypropylene added product, POE(m) POP(n) each represents a block added product of m moles of polyoxyethylene and n moles of polyoxypropylene, and PEG400 represents polyethylene glycol having an average molecular weight of 400.

*2: Unable to be measured because of necking phenomenon

Examples A26 to A29

A test piece was produced in the same manner as in Example A1 except that 0.8 part by weight of stearic amide was used instead of montanoic acid wax as the lubricant and each kind of plasticizers shown in Table A3 was used in each amount shown in Table A3. In the same way, the performances were evaluated. The results are shown in Table A3.

Table A3

| Example | | Plasticizer | Added amount (parts by weight) | Before treatment | | | | After treatment (at 60°C for 1week) | | |
|---|---|---|---|---|---|---|---|---|---|---|
| | | | | 100% Modulus (MPa) | Haze value (%) | Bending whitening | Surface state (existence of bleeding) | 100% Modulus (MPa) | Haze value (%) | Surface state (existence of bleeding) |
| | A26 | POE(4)2-butyl-2-ethyl-1,3-hydroxypropane salicylic acid diester | 20 | 11.2 | 2.7 | Not found | Not found | 11.4 | 2.9 | Not found |
| | A27 | POE(12) trimethylolpropane salicylic acid triester | 25 | 11.3 | 4.3 | Not found | Not found | 11.5 | 4.4 | Not found |
| | A28 | POE(16)pentaerythritol salicylic acid tetraester | 25 | 10.0 | 3.0 | Not found | Not found | 9.8 | 3.1 | Not found |
| | A29 | POE(8) cyclohexaedimethanol salicylic acid diester | 20 | 12.1 | 2.3 | Not found | Not found | 12.0 | 2.3 | Not found |

Examples A30 to A45 and Comparative Examples 5 to 6

A composition made of 100 parts by weight of an amorphous polyester resin (TSUNAMI GS2, manufactured

by Eastman Chemical Co., glass transition temperature: 81°C), 0.8 part by weight of montanoic acid wax, and each amount of each kind of plasticizers shown in Table A4 was kneaded with a 6-inch roll of 165°C temperature for 15 minutes, and made into a test piece of 1 mm thickness with a press-forming machine of 190°C temperature.

About the resultant test piece, the resistance against water whitening thereof was evaluated by the following method. The results are shown in Table A4.

<Method for evaluating the resistance against water whitening>

The test piece (100 mm in length × 25 mm in width × 1 mm in thickness) was immersed in ion-exchange water at room temperature for 24 hours, and then the state of the test piece was observed with the naked eye. The result was evaluated according to the following standard.

◎ : Transparency was recognized and whitening was not caused.
○: Transparency was recognized and whitening was slightly caused.
Δ: Whitening was observed but transparency was also recognized.
×: Transparency was hardly recognized and almost all parts were whitened.

Table A4

| | | Plasticizer | Added amount (parts by weight) | Resistance against water whitening |
|---|---|---|---|---|
| Example | A30 | 2-ethylhexanol p-hydroxybenzoic acid monoester | 20 | ◎ |
| | A31 | n-tetradecanol p-hydroxybenzoic acid monoester | 20 | ◎ |
| | A32 | Isodecanol p-hydroxybenzoic acid monoester | 20 | ◎ |
| | A33 | Isotridecanol p-hydroxybenzoic acid monoester | 20 | ◎ |
| | A34 | POE(2)2-ethylhexyl ether p-hydroxy benzoic acid monoester | 20 | ○ |
| | A35 | POE(2) benzyl ether p-hydroxybenzoic acid monoester | 20 | ○ |
| | A36 | POP(6)phenyl ether p-hydroxybenzoic acid monoester | 20 | ◎ |
| | A37 | 2-ethylhexanol salicylic acid monoester | 20 | ◎ |
| | A38 | n-octanol salicylic acid monoester | 20 | ◎ |
| | A39 | Isononanol salicylic acid monoester | 20 | ◎ |
| | A40 | n-decanol salicylic acid monoester | 20 | ◎ |
| | A41 | Isodecanol salicylic acid monoester | 20 | ◎ |
| | A42 | POE(2)2-ethylhexyl ether salicylic acid monoester | 20 | ○ |
| | A43 | POE(2)2-ethylhexyl ether 3-hydroxy-2-naphthonic acid monoester | 20 | ○ |
| | A44 | POE(2)2-ethylhexyl ether 5-hydroxy isophthalic acid diester | 20 | ○ |
| | A45 | POE(2)POP(2)2-ethylhexyl ether p-hydroxybenzoic acid monoester | 20 | ◎ |
| Comparative example | 5 | POE(4)methyl ether adipic acid diester | 20 | × |
| | 6 | Emanon 1112 (Kao Corp.) | 20 | × |

Examples A46 to A47

A composition made of 100 parts by weight of an amorphous polyester resin (TSUNAMI GS2, manufactured by Eastman Chemical Co., glass transition temperature: 81°C), 0.8 part by weight of stearic amide, 20 parts of 2-ethylhexanol p-hydroxybenzoic acid monoester (i.e., 2-ethylhexanol monoester of p-hydroxybenzoic acid) and each amount shown in Table A5 of phosphoric acid or phosphrous acid was kneaded with a 6-inch roll of 165°C temperature for 15 minutes, and made into a test piece of 1 mm thickness with a press-forming machine of 190°C temperature.

About the resultant test piece, the hue thereof was evaluated by the following method. The results are shown in Table A5.

<Method for evaluating the hue>

A spectrum color meter SE2000 made by Nippon Denshoku Industries Co., Ltd. was used to measure the hue (b value) of the surface of the test piece (1 mm in thickness × 50 mm × 50 mm) on the basis of JIS Z 8722. The hue (b value) represents the degree of yellow. As the value is larger, the yellow is intenser. The b value of a composition wherein phosphoric acid or phosphorous acid was not added and only 0.8 part by weight of stearic amide and 20 parts by weight of 2-ethylhexanol monoester of p-hydroxybenzoic acid were added was 10.1.

Table A5

| | | | Added amount (parts by weight) | Hue (b value) |
|---|---|---|---|---|
| Example | A46 | Phosphorous acid | 0.04 | 0.9 |
| | A47 | Phosphoric acid | 0.04 | 0.8 |

As is understood from Table A5, the compositions to which phosphoric acid or phosphorous acid was added had a small b value and excellent yellowing resistance.

Examples A48 to A52

A composition made of 100 parts by weight of an amorphous polyester resin (TSUNAMI GS2, manufactured by Eastman Chemical Co., glass transition temperature: 81°C), 0.8 part by weight of sodium dodecylbenzenesulfonate, and each amount of each kind of plasticizers shown in Table A6 was kneaded with a 6-inch roll of 165°C temperature for 15 minutes, and made into a test piece of 1 mm thickness with a press-forming machine of 190°C temperature.

About the resultant test piece, the softness, transparency and surface state were evaluated in the same way as in Example A1.

Examples B1 to B13

A composition made of 100 parts by weight of an amorphous polyester resin (TSUNAMI GS2, manufactured by Eastman Chemical Co.), 0.8 part by weight of montanoic acid wax, and each amount of each kind of plasticizers shown in Table B1 was kneaded with a 6-inch roll of 165°C temperature for 15 minutes, and made into a test piece of 1 mm thickness with a press-forming machine of 190°C temperature.

About the resultant test piece, the softness, transparency and surface state were evaluated in the same way

as in Example A1. However, the test piece was put into an oven the temperature of which was controlled to 50°C. The results are shown in Table B1.

Table B1

| | | Plasticizer *1 | Added amount (parts by weight) | Before heat treatment | | | | After heat treatment (at 50°C for 1 week) | | |
|---|---|---|---|---|---|---|---|---|---|---|
| | | | | 100% Modulus (MPa) | Haze value (%) | Bending whitening | Surface state (existence of bleeding) | 100% Modulus (MPa) | Haze value (%) | Surface state (existence of bleeding) |
| Example | B1 | POE(4)methyl ether benzoic acid monoester | 15 | 10.2 | 3.5 | Not found | Not found | 10.5 | 3.7 | Not found |
| | B2 | POE(3)butyl ether phthalic acid diester | 20 | 7.8 | 3.2 | Not found | Not found | 7.7 | 3.1 | Not found |
| | B3 | POE(9)methyl ether terephthalic acid diester | 20 | 8.4 | 3.1 | Not found | Not found | 8.6 | 3.1 | Not found |
| | B4 | POE(4)methyl ether trimellitic acid triester | 10 | 18.5 | 3.5 | Not found | Not found | 18.5 | 3.6 | Not found |
| | B5 | POE(4)methyl ether trimellitic acid triester | 20 | 8.5 | 3.1 | Not found | Not found | 8.2 | 3.2 | Not found |
| | B6 | POE(4) methyl ether trimellic acid triester | 30 | 2.3 | 2.8 | Not found | Not found | 2.2 | 2.7 | Not found |
| | B7 | POE(3) butyl ether pyromellitic acid tetraester | 20 | 9.8 | 2.5 | Not found | Not found | 9.9 | 2.5 | Not found |
| | B8 | POE(30) methyl ether phthalic acid diester | 20 | 10.5 | 3.6 | Not found | Not found | 10.4 | 3.9 | Not found |
| | B9 | POE(4) methyl ether trimellitic acid diester | 20 | 9.5 | 2.8 | Not found | Not found | 9.3 | 2.8 | Not found |
| | B10 | POP(4)methyl ether trimellitic acid triester | 20 | 9.4 | 3.4 | Not found | Not found | 9.4 | 3.4 | Not found |
| | B11 | POP(2)POE(3) methyl ether trimellitic acid triester | 20 | 9.8 | 3.6 | Not found | Not found | 9.9 | 3.7 | Not found |
| | B12 | POE(4) methyl ether 1,2-cyclohexanedicarboxylic acid diester | 20 | 9.4 | 3.8 | Not found | Not found | 9.2 | 3.9 | Not found |
| | B13 | POE(2) benzyl ether trimellitic acid triester | 20 | 9.5 | 2.0 | Not found | Not found | 9.4 | 2.1 | Not found |

*1:.POE(n) represents an n-mole polyoxyethylene added product, POP(n) represents an n-mole polyoxypropylene added product and POE(m) POP(n) each represents a block added product of m moles of polyoxyethylene and n moles of polyoxypropylene.

*2: Unable to be measured because of necking phenomenon

Examples C1 to C3

A composition made of 100 parts by weight of an amorphous polyester resin (TSUNAMI GS2, manufactured by Eastman Chemical Co.), 0.8 part by weight of montanoic acid wax, and each amount of each kind of plasticizers shown in Table C1 was kneaded with a 6-inch roll of 165°C temperature for 15 minutes, and made into a test piece of 1 mm thickness with a press-forming machine of 190°C temperature. About the resultant test piece, the softness, transparency and surface state were evaluated in the same way as in Example A1. The results are shown in Table C1.

Table C1

| | | Plasticizer | Added amount (parts by weight) | Softness 100% modulus (MPa) | Transparency Haze value (%) | Bening whitening | Surface state (existence bleeding) |
|---|---|---|---|---|---|---|---|
| Example | C1 | N-butylbenzenesulfoamide | 10 | 15.4 | 3.2 | Not found | Not found |
| | C2 | N-butylbenzenesulfoamide | 20 | 13.2 | 3.4 | Not found | Not found |
| | C3 | N-butylbenzenesulfoamide | 30 | 8.5 | 2.8 | Not found | Not found |

Examples D1 to D14

A composition made of 100 parts by weight of an amorphous polyester resin (TSUNAMI GS2, manufactured by Eastman Chemical Co., glass transition temperature: 81°C), 0.8 part by weight of montanoic acid wax, and each amount of each kind of plasticizers shown in Tables D1 and D2 was kneaded with a 6-inch roll of 165°C temperature for 15 minutes, and made into a test piece of 1 mm thickness with a press-forming machine of 190°C temperature.

About the resultant test piece, the softness, transparency and surface state were evaluated in the same way as in Example A1. However, the test piece was put into an oven the temperature of which was controlled to 50°C. The results are shown in Table D1.

Example D1

| | | Plasticizer *1 | The mole number of EO /OH group *2 | Added amount (parts by weight) | Before heat treatment | | | | After heat treatment (at 50°C for 1 week) | | |
|---|---|---|---|---|---|---|---|---|---|---|---|
| | | | | | 100% Modulus (MPa) | Haze value (%) | Bending whitening | Surface state (existence of bleeding) | 100% modulus (MPa) | Haze value (%) | Surface state (existence of bleeding) |
| Example | D1 | POE(6) trimethylolpropane benzoic acid triester | 2 | 20 | 9.9 | 3.7 | Not found | Not found | 10.1 | 3.7 | Not found |
| | D2 | POE(6) trimethylolpropane benzoic acid diester | 2 | 20 | 9.5 | 3.6 | Not found | Not found | 9.4 | 3.7 | Not found |
| | D3 | POE(6) tirmethylolpropane p-butyl benzoic acid triester | 2 | 15 | 13.4 | 3.1 | Not found | Not found | 13.2 | 3.1 | Not found |
| | D4 | POE(8) pentaerythritol benzoic acid tetraester | 2 | 30 | 7.8 | 3.8 | Not found | Not found | 8.0 | 3.7 | Not found |
| | D5 | POE(8) pentaerythritol p-ethylbenzoic acid tetraester | 2 | 20 | 8.9 | 3.1 | Not found | Not found | 9.0 | 3.3 | Not found |
| | D6 | POE(8) pentaerythritol 2,4-dimethyl benzoic acid triester | 2 | 20 | 10.4 | 3.2 | Not found | Not found | 10.4 | 3.2 | Not found |
| | D7 | POE(8) diglycerin benzoic acid diester | 2 | 20 | 10.6 | 3.8 | Not found | Not found | 10.5 | 3.7 | Not found |
| | D8 | POE(4) cyclohexanedimethanol benzoic acid diester | 2 | 20 | 9.0 | 3.5 | Not found | Not found | 9.1 | 3.6 | Not found |
| | D9 | POE(8) cyclohexanediol p-chlorobenzoic acid diester | 4 | 20 | 9.3 | 3.4 | Not found | Not found | 9.2 | 3.4 | Not found |

Table D2

| | | Plasticizer *1 | The mole number of EO /OH group *2 | Added amount (parts by weight) | before heat treatment | | | | After heat treatment(at 50°C for 1 week) | | |
|---|---|---|---|---|---|---|---|---|---|---|---|
| | | | | | 100% Modulus (MPa) | haze value (%) | Bending whitening | Surface state (existence of bleeding) | 100% Modulus (MPa) | haze value (%) | Surface state (existence of bleeding) |
| Example | D10 | POE(9) trimethylolpropane cyclohexanecarboxylic acid triester | 3 | 20 | 10.9 | 3.7 | Not found | Not found | 11.0 | 3.7 | Not found |
| | D11 | POE(4) cyclohexanedimethanol butanoic acid diester | 2 | 20 | 8.5 | 3.8 | Not found | Not found | 8.7 | 3.6 | Not found |
| | D12 | POE(6) cyclohexanediol β-naphthalenecarboxylic acid diester | 3 | 20 | 11.5 | 3.8 | Not found | Not found | 11.5 | 3.8 | Not found |
| | D13 | POE(2)2-butyl-2-ethyl-1,3-propanediol benzoic acid diester | 1 | 20 | 9.9 | 3.6 | Not found | Not found | 9.9 | 3.7 | Not found |
| | D14 | POE(6) neopenthylglycol benzoic acid diester | 3 | 20 | 9.2 | 3.7 | Not found | Not found | 9.3 | 3.7 | Not found |

*1: POE(n) represents an n-mole polyoxyethylene added product

*2: The average number of added ethylene oxide molecules per hydroxyl group

*3: Unable to be measured because of necking phenomenon

## Claims

1. A plasticizer for amorphous polyester resin which comprises any one of the following (A), (B), (C) and (D):

(A) an ester of the following (Aa) component and (Ab) component:

(Aa) at least one selected from a hydroxy aromatic carboxylic acid represented by the following formula (AI):

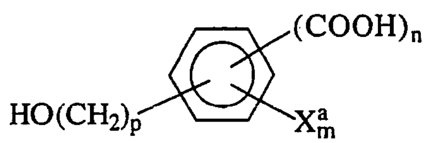

(AI)

(wherein $X^a$ represents a hydrogen atom, a hydroxyl group, an alkyl, alkenyl or alkoxy group having 1 to 22 carbon atoms, or a halogen atom, n and m are each an integer of 1 or more, n + m is 5 and p is an integer of 0 to 3), a hydroxy condensed polycyclic aromatic carboxylic acid or a hydroxy alicyclic carboxylic acid having, in a single molecule thereof, one or more hydroxyl groups and one or more carboxylic groups, anhydrides of these carboxylic acids, or C1-3 lower-alkyl esters of these carboxylic acids, and

(Ab) at least one selected from a hydroxy compound selected from an aliphatic alcohol, an alicyclic alcohol, an aromatic alcohol, phenol and an alkyl phenol, or alkylene oxide added products (the carbon atom number of the alkylene group being from 2 to 4, and the average number of added alkylene oxide molecules being more than 0 and 30 or less) of these hydroxy compounds;

(B) an ester of the following (Ba) component and (Bb) component:

(Ba) at least one selected from an aromatic carboxylic acid represented by the following formula (BI):

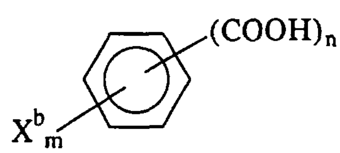

(BI)

(wherein $X^b$ represents a hydrogen atom, a methyl group, or a halogen atom, n and m are each an integer of 1 or more and n + m is 6), a condensed polycyclic aromatic carboxylic acid or an alicyclic carboxylic acid having, in a single molecule thereof, one or more carboxylic groups, anhydrides of these carboxylic acids, or C1-3 lower-alkyl esters of these carboxylic acids, and

(Bb) at least one selected from an alkylene oxide added product (the carbon atom number of the alkylene group being from 2 to 4, and the average number of added alkylene oxide molecules being from 1 to 30) of a monohydroxy compound selected from an aliphatic monoalcohol, an alicyclic monoalcohol, an aromatic monoalcohol, phenol and an alkyl phenol;

(C) an N-alkylated product of an aromatic sulfonamide (the carbon atom number of the alkyl group being from 1 to 22); and
(D) an ester of the following (Da) component and (Db) component:

(Da) at least one selected from an aromatic monocarboxylic acid represented by the following formula (DI):

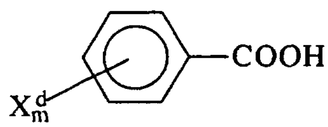

(D I)

(wherein $X^d$ represents a hydrogen atom, an alkyl, alkenyl or alkoxy group having 1 to 22 carbon atoms, or a halogen atom, m is an integer of 1 to 5 and $X^d$'s, the number of which is m, may be the same or different) , an aliphatic monocarboxylic acid having a linear or branched chain having 1 to 22 carbon atoms, a condensed polycyclic aromatic monocarboxylic acid, an alicyclic monocarboxylic acid, or lower-alkyl esters (the carbon atom number of the alkyl group being from 1 to 3) of these monocarboxylic acids, and
(Db) at least one selected from alkylene oxide added products (the carbon atom number of the alkylene group being from 2 to 4, and the average number of added alkylene oxide molecules per hydroxyl group being more than 0 and 10 or less) of a hydroxy compound selected from an aliphatic bivalent alcohol represented by the following formula (DII):

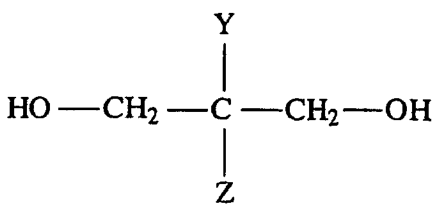

(DII)

(wherein Y and Z represent an alkyl or alkenyl group having 1 to 8 carbon atoms and may be the same or different) , a polyhydric alcohol having, in a single molecule thereof, three or more hydroxyl groups and having 3 to 30 carbon atoms, and an alicyclic diol having, in a single molecule thereof, two hydroxyl groups or methylol groups.

**2.** The plasticizer according to claim 1, which comprises the (A), the (Aa) component being p-hydroxybenzoic acid, salicylic acid, 4-hydroxymethylbenzoic acid, 5-hydroxyisophthalic acid, 3-hydroxy-2-naphthoic acid, 2-hydroxy-5-methylbenzoic acid, or a C1-3 lower-alkyl ester thereof.

**3.** The plasticizer according to claim 1 or 2, which comprises the (A), the (Ab) component being a compound represented by the following formula (AII):

$$R^1O(AO)_yH \quad \text{(AII)}$$

(wherein $R^1$ represents a hydrogen atom, a linear or branched alkyl or alkenyl group having 1 to 22 carbon atoms, a phenyl group, a benzyl group, or an alkylphenyl or alkylbenzyl group having an alkyl group having 1 to 18 carbon atoms, A represents an alkylene group having 2 to 4 carbon atoms, y is a numerical value of 0 to 30, which represents the average number of added alkylene oxide molecules, and A's, the number of which is y, may be the same or different).

**4.** The plasticizer according to claim 1 or 2, which comprises the (A), the (Ab) component being a compound represented by the following general formula (AIII):

$$R^2OH \qquad (AIII)$$

(wherein $R^2$ is a linear or branched alkyl group or alkenyl group having 3 to 22 carbon atoms, a benzyl group, or an alkylbenzyl group having an alkyl group having 1 to 18 carbon atoms).

**5.** The plasticizer according to claim 1 or 2, which comprises the (A), the (Ab) component being the (Db).

**6.** The plasticizer according to claim 1, which comprises the (B), the (Ba) component being benzoic acid, phthalic acid, terephthalic acid, trimellitic acid, pyromellitic acid, naphthalenedicarboxylic acid, cyclohexanedicarboxylic acid, or an anhydride or a C1-3 lower-alkyl ester thereof.

**7.** The plasticizer according to claim 1, which comprises the (B), the (Ba) component being a compound wherein n is 2 or more in the formula (BI).

**8.** The plasticizer according to any one of claims 1, 6 and 7, which comprises the (B), the (Bb) component being a compound represented by the general formula (BII):

$$R^1O(AO)_yH \qquad (BII)$$

(wherein $R^1$ represents a linear or branched alkyl or alkenyl group having 1 to 22 carbon atoms, a phenyl group, a benzyl group, or an alkylphenyl group having an alkyl group having 1 to 18 carbon atoms, A represents an alkylene group having 2 to 4 carbon atoms, y is a numerical value of 0 to 30, which represents the average number of added alkylene oxide molecules, and A's, the number of which is y, may be the same or different).

**9.** The plasticizer according to claim 1, which comprises the (C), the N-alkylated product of the aromatic sulfonamide being an N-alkylbenzenesulfonamide represented by the following general formula (CI):

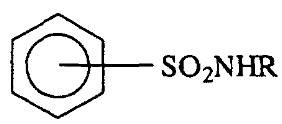

( CI )

(wherein R represents a linear or branched alkyl group having 1 to 22 carbon atoms).

**10.** The plasticizer according to claim 1, which comprises the (D), the (Da) component being benzoic acid which may have an alkyl group having 1 to 6 carbon atoms or a halogen atom as a substituent, or a lower-alkyl (the carbon atom number of the alkyl group being from 1 to 3) ester.

**11.** The plasticizer according to claim 1 or 10, which comprises the (D), the (Db) component being an alkylene oxide added product (the carbon atom number of the alkylene group being from 2 to 4 and the average number of added alkylene oxide molecules being more than 0 and 10 or less) of a hydroxy compound selected from neopentyl glycol, 2-butyl-2-ethyl-1,3-propanediol, glycerin or polyglycerin having 3 to 30 carbon atoms, sorbitol, sorbitan, trimethylolpropane, pentaerythritol, cyclohexanediol, or cyclohexanedimethanol.

**12.** An amorphous polyester resin composition, which comprises an amorphous polyester resin and the plasticizer according to any one of claims 1 to 11.

**13.** The amorphous polyester resin composition according to claim 12, wherein the plasticizer comprises the (A), the composition further comprising at least one selected from phosphoric acid and phosphorous acid.

**14.** The amorphous polyester resin composition according to claim 12, wherein the plasticizer comprises the (B) , and the content thereof is from 1 to 70 parts by weight per 100 parts by weight of the amorphous polyester resin.

**15.** The amorphous polyester resin composition according to claim 12, wherein the plasticizer comprises the (C) , and the content thereof is from 3 to 50 parts by weight per 100 parts by weight of the amorphous polyester resin.

**16.** The amorphous polyester resin composition according to claim 12, which further comprises an anionic surfactant as a lubricant.

**17.** Use of the plasticizer according to any one of claims 1 to 11 as a plasticizer for amorphous polyester resin.

## INTERNATIONAL SEARCH REPORT

International application No.
PCT/JP02/05919

A. CLASSIFICATION OF SUBJECT MATTER
Int.Cl[7] C08L67/02, C08K5/10, C08K5/435

According to International Patent Classification (IPC) or to both national classification and IPC

B. FIELDS SEARCHED

Minimum documentation searched (classification system followed by classification symbols)
Int.Cl[7] C08L67/00-67/02

Documentation searched other than minimum documentation to the extent that such documents are included in the fields searched

| | | | |
|---|---|---|---|
| Jitsuyo Shinan Koho | 1926-2002 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2000-290415 A (Okamoto Industries, Inc.), 17 October, 2000 (17.10.00), Column 1, lines 6 to 16; column 6, lines 35 to 38; column 8, lines 35 to 50 (Family: none) | 1,6-8,12, 14,16,17<br>2-5,9-11, 13,15 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>17 September, 2002 (17.09.02) | Date of mailing of the international search report<br>01 October, 2002 (01.10.02) |
| Name and mailing address of the ISA/<br>Japanese Patent Office | Authorized officer |
| Facsimile No. | Telephone No. |

Form PCT/ISA/210 (second sheet) (July 1998)